# DEMANDE DE BREVET EUROPEEN

(11) **EP 4 141 039 A1**
(43) Date de publication de la demande: **01.03.2023**
(21) Numéro de dépôt: 22187953.9
(22) Date de dépôt: 29.07.2022
(51) Int. Cl.: C08G 18/32, C08G 18/66, C08G 18/73, C08G 18/79, C08G 18/08, C09D 175/04

(54) **RESINE POLYUREE, POLYUREE-URETHANE OU POLYURETHANE, MATERIAU COMPOSITE OBTENU, PROCEDE DE FABRICATION D'UNE PIECE DE STRUCTURE ET PIECE DE STRUCTURE OBTENUE**

(30) Priorité: 31.08.2021 FR 2109089
(71) Demandeur: Societe Nouvelle Juxta, 25400 Audincourt (FR)
(72) Inventeur: MAMBRE, Loup, 90340 CHEVREMONT (FR); MICHAUD, Philippe, 68100 MULHOUSE (FR); SGRO, Julien, 90140 BREBOTTE (FR)
(74) Mandataire: Cabinet Laurent & Charras

(57) **Abrégé**

L'invention concerne une résine polyurée, polyurée-uréthane ou polyuréthane, biosourcée à au moins 35% de sa masse totale, qui est obtenue à partir d'un premier composant de réaction comprenant au moins un trimère du diisocyanate de pentaméthylène biosourcé, et d'un second composant de réaction comprenant au moins une polyamine aromatique et optionnellement au moins un polyol, ou au moins un polyol et un dianhydrohexitol biosourcé ; lesdits premier et second composants de réaction étant mélangés selon un rapport NCO/NH₂+OH compris entre 0,75 et 1,25.

L'invention concerne aussi un matériau composite obtenu à partir de ladite résine polyurée, polyurée-uréthane ou polyuréthane, renforcée par des charges issues de fibres naturelles.

La résine polyurée, polyurée-uréthane ou polyuréthane et le matériau composite sont tous deux compatibles avec le procédé RIM pour la fabrication en série de pièces de structure moulées particulièrement légères, résistantes et à faible empreinte carbone.

## Description

### Domaine technique

La présente invention concerne une résine polyurée, polyurée-uréthane ou polyuréthane obtenue par réaction d'au moins un premier composant de réaction à base d'isocyanate et d'au moins un second composant de réaction à base d'amine et/ou de polyol.

Plus particulièrement, l'invention concerne une résine de ce type qui est à la fois biosourcée et qui présente des propriétés mécaniques améliorées et notamment une dureté élevée. Cette résine peut ainsi être utilisée pour fabriquer, avec une empreinte carbone limitée, des pièces de structure nécessitant une grande rigidité.

L'invention concerne également un matériau composite obtenu à partir de ladite résine, un procédé de fabrication d'une pièce de structure à partir de ladite résine ou dudit matériau composite et une pièce de structure pouvant être obtenue par ledit procédé.

### Technique antérieure

Une des techniques de fabrication, qui consiste à remplir un moule avec une résine polyurée, polyurée-uréthane ou polyuréthane, ou un matériau composite obtenu à partir de ladite résine, pour obtenir une pièce moulée, est communément connue sous le nom de « Reaction Injection Moulding » et notamment par son acronyme « RIM ». Le procédé RIM permet ainsi d'obtenir des pièces moulées selon un temps de cycle court, avec de très bonnes caractéristiques mécaniques. Le procédé RIM est donc particulièrement avantageux pour la fabrication de pièces moulées en grande série. Les pièces moulées obtenues par le procédé RIM sont utilisées dans une multitude de domaines techniques, tels que l'industrie automobile et aéronautique, la construction navale et ferroviaire, le secteur médical, le secteur du sport, le bâtiment, l'industrie pétrolière et le secteur électrique et énergétique. Toutefois le procédé RIM n'est pas le seul et tout autre procédé de mise en forme et de polymérisation d'une résine polyurée, polyurée-uréthane ou polyuréthane, ou d'un matériau composite à partir de ladite résine peut être concerné par l'invention.

Pour la mise en œuvre par le procédé RIM, l'utilisation d'une résine polyurée, polyurée-uréthane ou polyuréthane, constituée d'au moins une partie isocyanate et d'au moins une partie amine et/ou polyol, est connue depuis de nombreuses années comme étant une technologie fiable, accessible et peu coûteuse.

De nos jours, la réduction de l'empreinte carbone des activités industrielles et du transport est devenue une préoccupation majeure afin de limiter le réchauffement climatique.

De nombreuses entreprises se sont engagées vers la neutralité carbone à plus ou moins longue échéance et imposent à leurs fournisseurs des objectifs de réduction de l'empreinte carbone de leurs produits. C'est le cas en particulier dans le domaine de l'automobile, cité à titre d'exemple.

De nombreuses pièces en matières plastiques utilisées dans un véhicule automobile sont fabriquées à partir d'une résine polyurée, polyurée-uréthane ou polyuréthane. Il est connu que l'empreinte carbone des pièces moulées par le procédé RIM est importante, depuis la fabrication des matières premières jusqu'à l'obtention de la pièce terminée. En effet, les matières premières utilisées classiquement dans le procédé RIM sont issues du pétrole ou du gaz. Elles nécessitent donc une quantité d'énergie importante pour leur production, et ne sont pas renouvelables. Il en va de même pour les fibres de renfort ajoutées dans ladite résine pour en faire un matériau composite renforcé, qui sont traditionnellement des fibres de verre, des fibres de carbone, etc.

L'utilisation de matières premières biosourcées, donc renouvelables, prend alors toute son importance. En remplaçant les matières premières d'origine fossile par des molécules analogues provenant de la biomasse, il est envisageable de réduire l'empreinte carbone de 30 à 50% selon l'origine des matières premières, comme démontré dans une étude récente de Jiahia Zheng et Sangwon Suh de l'université de Californie publiée en Mai 2019 dans le magazine Nature Climate Change (Vol 9 | MAY 374 2019 | 374-378) intitulée « Stratégies to reduce the global carbon footprint of plastics ».

Il est donc particulièrement intéressant de développer une résine polyurée, polyurée-uréthane ou polyuréthane présentant un taux de matières biosourcées le plus élevé possible. De nombreux amines et polyols biosourcés sont disponibles sur le marché, alors que la sélection d'isocyanates biosourcés est très limitée. De fait, les résines polyurée, polyurée-uréthane ou polyuréthanes biosourcées disponibles à ce jour ne sont que très partiellement biosourcées, puisqu'elles sont synthétisées à partir d'amines et/ou de polyols biosourcés et d'isocyanates issus de ressources fossiles. Parmi les quelques isocyanates biosourcés disponibles commercialement, le pentaméthylène-diisocyanate (PDI) et ses dérivés (par exemple le trimère d'isocyanurate PDI de Covestro^{®} ou de MITSUI^{®}) présentent l'intérêt de contenir un taux de carbone renouvelable très élevé (≃70%). Cependant, il s'agit d'isocyanates aliphatiques qui sont principalement utilisés pour des applications de revêtement, comme décrit dans la présentation du Dr. Berta Vega Sanchez lors du symposium NVVT le 26 Janvier 2016 intitulée « The first bio-based diisocyanate and a new building block for PU coatings : PDI », et non pour fabriquer des pièces de structure, car la rigidité des pièces obtenues est faible.

En outre, pour le procédé RIM, il est préférable d'utiliser des isocyanates de type diisocyanate aromatique car ils sont plus réactifs que des isocyanates de type diisocyanate aliphatique. Néanmoins, il est possible d'utiliser ces diisocyanates aliphatiques malgré leurs réactivités inférieures dans un procédé RIM, comme décrit dans la publication US 2010/0305294 A1. Cette publication décrit l'utilisation de trimères du diisocyanate d'hexaméthylène ou du diisocyanate d'isophorone. Cette publication montre l'intérêt pour les diisocyanates aliphatiques, particulièrement sur la tenue au jaunissement dans le temps par rapport aux formules classiques basées sur des diisocyanates aromatiques jaunissant dans le temps. Cependant, les matériaux polyuréthanes obtenus présentent un comportement de type élastomère, caractérisé par leur flexibilité (avec un allongement à rupture supérieur à 80%) et une faible dureté (inférieure à 90 Shore A). Ce comportement les rend inaptes pour des applications structurelles requérant une grande rigidité des pièces moulées destinées au capotage de machines, aux pièces de carrosserie, etc. Cette publication US ne mentionne pas l'utilisation de matières premières biosourcées.

La publication US 2019/0144593 A1 mentionne l'utilisation de fibres de verre dans un procédé de fabrication de matériaux composites à base de polyisocyanurate pour obtenir des composites légers ayant des propriétés mécaniques élevées, destinés à la fabrication de pièces de structure. Cependant, la résine décrite n'est pas une résine polyurée, polyurée-uréthane ou polyuréthane. Il s'agit d'une résine polyisocyanurate comprenant des cycles 1,3,5-triazines, obtenue par trimérisation de l'isocyanate seul sans second composant de réaction. Elle est donc différente chimiquement de celle visée par l'invention. De plus, le procédé employé diffère du procédé RIM sur un point important : la température de polymérisation prescrite dans les exemples décrits est supérieure à 150°C pour une durée minimum de polymérisation de 30 minutes contrairement au procédé RIM dans lequel les températures de réticulation dépassent rarement les 100°C pour une durée de polymérisation inférieure à 30 min. De fait, le procédé de fabrication décrit dans cette publication nécessite plus d'énergie et génère des émissions carbones plus importantes que le procédé RIM classique. En outre, les conditions décrites ne sont pas adaptées à la production de pièces moulées à faible empreinte carbone, de surcroit en grande série. D'autre part, les matériaux composites obtenus présentent une densité supérieure à 1,3 g/cm3, ce qui conduit à des pièces plus lourdes comparativement à des pièces non renforcées. Enfin aucune propriété mécanique n'a été mesurée car l'objectif principal décrit dans cette publication est la résistance au jaunissement de la matière. Si cette publication mentionne l'utilisation d'une matière première biosourcée (dans deux exemples), elle ne précise aucune limite minimum en matière biosourcée.

La publication CN102850775 décrit l'utilisation de fibres de bambou comme renfort dans un matériau composite polyuréthane. Cependant la résine polyuréthane utilisée n'est pas d'origine biosourcée, car elle est principalement constituée d'isocyanate aromatique. De plus la quantité de fibres de bambou utilisée est inférieure ou égale à 7,5%, ce qui limite le niveau de renforcement du matériau composite et ne convient pas pour certaines pièces de structure.

On connait également la demande US 2013/338330 A1 qui décrit une méthode de synthèse du pentaméthylène de diisocyanate (PDI) par phosphogénation de pentaméthylène diamine obtenu de manière biochimique, et l'utilisation du PDI obtenu pour fabriquer des résines de polyuréthane ou de polyurée. Cependant, le PDI est un composé toxique, extrêmement volatil et particulière instable, qui est très difficile à utiliser dans le cadre d'un procédé industriel et en particulier dans un procédé de type RIM. En outre, l'utilisation de polyamines aromatiques ou de dianhydrohexitol n'est pas divulguée et la fabrication de résines de polyurée-uréthane n'est pas décrite dans ce document.

Les solutions actuelles ne sont donc pas satisfaisantes. Aucune résine de polyuréthane, de polyurée ou de polyurée-uréthane à la fois biosourcée et présentant des propriétés mécaniques de rigidité et densité adaptées pour pouvoir être utilisée pour fabriquer des pièces de structure telles que des pièces de carrosserie ou de capotage, et pouvant être fabriquée industriellement par un procédé RIM n'a été proposée.

### Exposé de l'invention

La présente invention vise à pallier ces inconvénients en proposant une résine polyurée, polyurée-uréthane ou polyuréthane et un matériau composite obtenu à partir de cette résine, à haute teneur en matières premières biosourcées et à propriété mécaniques améliorées. Cette résine et ce matériau composite peuvent convenir à tout type de procédé industriel de mise en forme et notamment à un procédé RIM pour la fabrication de pièces moulées en série, spécifiquement de pièces de structure à haute résistance mécanique, permettant de réduire significativement l'empreinte carbone des pièces fabriquées, et de confirmer l'intérêt technique, économique et écologique d'intégrer des matières premières biosourcées à la fois dans une résine polyurée, polyurée-uréthane ou polyuréthane et dans un matériau composite obtenu à partir de ladite résine.

Dans ce but, l'invention concerne une résine polyurée, polyurée-uréthane ou polyuréthane qui est le produit de réaction d'au moins un premier composant de réaction à base d'isocyanate et d'au moins un second composant de réaction à base d'amine et/ou de polyol du genre indiqué en préambule.

Elle se caractérise en ce que ledit premier composant de réaction comporte au moins un isocyanate aliphatique biosourcé qui est un trimère du diisocyanate de pentaméthylène biosourcé, représentant au moins 75%, et de préférence au moins 90% en masse dudit premier composant de réaction, en ce que ledit second composant de réaction comporte au moins une polyamine aromatique, biosourcée ou non, avec ou sans plastifiant, et optionnellement au moins un polyol biosourcé ou non, ou comporte au moins un polyol, biosourcé ou non, et au moins un diol biosourcé de type dianhydrohexitol, en ce que ledit premier composant de réaction et ledit second composant de réaction présentent ensemble un rapport NCO/NH₂+OH compris entre 0,75 et 1,25 et préférentiellement entre 0,9 et 1,1, et en ce que ladite résine polyurée, polyurée-uréthane ou polyuréthane est biosourcée à au moins 35% de la masse totale.

Dans une forme de réalisation préférée de l'invention, ledit premier composant de réaction comporte un trimère du diisocyanate de pentaméthylène biosourcé qui représente 100% en masse dudit premier composant de réaction.

Au sens de l'invention une polyamine est un composé organique qui comporte 2 (diamine) ou un nombre supérieur de fonctions aminés, De la même façon, un polyol est un composé organique qui comporte 2 (diol) ou un nombre supérieur de fonctions hydroxyles.

Le fait d'utiliser un trimère du diisocyanate de pentaméthylène en tant que composé majoritaire du premier composant de réaction, rend beaucoup plus simple l'industrialisation de la fabrication de la résine selon l'invention. En effet, ce composé est stable, peu volatil et beaucoup plus facile à utiliser que le PDI par exemple. Une fabrication par un procédé RIM peut ainsi être envisagée.

En outre, la présence d'au moins une polyamine aromatique ou d'au moins un diol de la famille des dianhydrohexitol parmi les composés du second composant de réaction, permet avantageusement d'augmenter la rigidité de la résine obtenue.

En effet, au niveau de la structure macromoléculaire de la résine, ces composés ont une fonction d'allongeur de chaîne et viennent allonger les segments rigides formés par les motifs isocyanates. La part relative des segments souples dus aux motifs polyol lorsque la résine en comporte diminue.

Les propriétés mécaniques de la résine obtenue sont améliorées. La résine présente une dureté augmentée, tout en étant de faible densité. Des pièces à la fois légères et très résistantes, et donc parfaitement adaptées pour être utilisées en tant que pièces de structure, peuvent ainsi être fabriquées à partir de la résine ou du matériau composite selon l'invention.

Selon les variantes de réalisation, ledit premier composant de réaction peut comporter en outre un ou plusieurs diisocyanates, représentant au plus 25% et préférentiellement au plus 10% en masse du premier composant de réaction, choisi dans le groupe comprenant le pentaméthylène diisocyanate, l'hexaméthylène diisocyanate, le diisocyanate d'ester éthylique de L-lysine, l'isophorone diisocyanate, le 4,4'-diisocyanatodicyclohexylmethane, le 4,4'-diisocyanate de diphénylméthylène, le 2-4-diisocyanate de toluène, le 2-6-diisocyanate de toluène, le 1,4-Bis (isocyanatomethyl) cyclohexane, le meta-xylylene diisocyanate, le tetramethyl xylylene diisocyanate, le norbornane diisocyanate, le 1,5-naphtalene diisocyanate, les trimères, biurets, allophanates ou uretdiones issus des diisocyanates.

En fonction de la résine souhaitée, ledit second composant de réaction peut comporter au moins une polyamine aromatique, qui a une masse molaire inférieure à 1000 g/mol, et de préférence comprise entre 100 et 500 g/mol, et qui représente au plus 80% et de préférence au plus 65% en masse dudit second composant de réaction. Dans ce cas, la polyamine aromatique est préférentiellement choisie parmi la 3,5-diethyltoluene-2,4-diamine, la 3,5-diethyltoluene-2,6-diamine, la 3,5-dimethylthio-2,4-toluenediamine, la 3,5-dimethylthio-2,6-toluenediamine ou un mélange de ces composés.

Dans le cas où ledit second composant de réaction comporte une polyamine, il peut comporter en outre un plastifiant, représentant au plus 60%, de préférence au plus 50% et préférentiellement au plus 45% en masse dudit second composant de réaction.

En fonction de la résine souhaitée, ledit second composant peut comporter au moins un polyol biosourcé ou non, représentant au moins 10% et de préférence au moins 25% en masse dudit premier composant de réaction, étant choisi dans le groupe comprenant les polyéther polyols, les polyester polyols, les polycaprolactone polyols, les polytétrahydrofurane polyols, et les polyéther polyester polyols, ayant une masse molaire comprise entre 50 et 4000 g/mol, de préférence entre 100 et 2000 g/mol et préférentiellement entre 150 et 1000 g/mol, et représentant au moins 10% et préférentiellement au moins 25% en masse totale du second composant de réaction.

Selon les variantes de réalisation, ledit second composant de réaction peut comporter en outre au moins un diol biosourcé de type dianhydrohexitol représentant au moins 10% et de préférence au moins 15% en masse dudit second composant de réaction.

Selon les variantes de réalisation, ledit diol biosourcé de type dianhydrohexitol est choisi parmi l'isosorbide, le mannitol, le sorbitol, l'isoidide, l'isomanide ou un mélange de ces composés.

Selon les variantes de réalisation, ledit second composant de réaction peut comporter en outre un catalyseur à base de métal choisi dans le groupe comprenant l'étain, le plomb, le zinc, le bismuth, le cadmium, l'antimoine, l'aluminium, le zirconium, pris seul ou en combinaison.

Optionnellement, ledit second composant de réaction peut également comporter au moins un additif choisi parmi un absorbeur de rayonnement ultra-violets à hauteur de 0.1% à 4% en masse, un stabilisateur de lumière à hauteur de 0,1% à 2% en masse, un absorbeur d'humidité à hauteur de 0,1% à 3% en masse, un anti-mousse dans une quantité inférieure à 0,2% en masse, un antioxydant à hauteur de 0,1% à 2% en masse, un colorant dans une quantité inférieur à 2% en masse.

Pour atteindre le but fixé, l'invention concerne également un matériau composite qui est un mélange de ladite résine polyurée, polyurée-uréthane ou polyuréthane et de charges de renfort, caractérisé en ce que lesdites charges de renfort représentent au moins 15% et de préférence au moins 20% en masse du second composant de réaction de ladite résine polyurée, polyurée-uréthane ou polyuréthane, ou au moins 5%, de préférence au moins 7,5%, et préférentiellement au moins 10% en masse totale dudit matériau composite.

Préférentiellement, lesdites charges de renfort comprennent des fibres naturelles choisies dans le groupe comportant des fibres de bambou, de bois, de sisal, de lin, de chanvre, de cellulose, prises seules ou mélangées entre au moins deux d'entre-elles,

Le but de l'invention est également atteint par un procédé de fabrication d'une pièce à partir de ladite résine polyurée, polyurée-uréthane ou polyuréthane ou dudit matériau composite, dans lequel la polymérisation de ladite résine polyurée, polyurée-uréthane ou polyuréthane ou dudit matériau composite s'effectue lors d'un procédé de fabrication RIM dans un moule à température ambiante, ou à température comprise entre 30°C et 110°C et préférentiellement comprise entre 40°C et 90°C.

Dans ce cas, la durée nécessaire à la polymérisation peut être inférieure à 5 minutes, préférentiellement inférieure à 3 minutes, et le temps de démoulage de la pièce obtenue peut être inférieur à 30 minutes et préférentiellement inférieur à 20 minutes.

On peut ainsi obtenir tout type de pièce moulée par le procédé selon l'invention et de préférence des pièces de structure.

L'invention concerne enfin une pièce qui est au moins partiellement en une résine polyurée, polyurée-uréthane ou polyuréthane selon l'invention ou en un matériau composite selon l'invention.

Il s'agit préférentiellement d'une pièce de structure ayant une densité inférieure à 1,3 g/cm3, une dureté supérieure ou égale à 70 Shore D, et un taux de matières biosourcées d'au moins 35% de la masse totale de ladite pièce.

Les objectifs de l'invention sont donc atteints, car la résine, le matériau composite et la pièce selon l'invention ont à la fois une faible empreinte carbone et des propriétés mécaniques adaptées pour faire des pièces de structure. En outre, elles peuvent être obtenues par un procédé facilement industrialisable, préférentiellement de type RIM.

### Description des modes de réalisation

Il a été découvert de manière surprenante et inattendue la possibilité de fabriquer des résines polyurées, polyurée-uréthanes ou polyuréthanes dites biosourcées, qui permettent d'atteindre des caractéristiques globalement similaires voire supérieures aux résines polyurées, polyurée-uréthanes ou polyuréthanes classiques, telles que celles employées pour le procédé RIM, contrairement à ce que l'homme de l'art pouvait s'attendre compte tenu d'une part de la faible réactivité des isocyanates aliphatiques et d'autre part de la difficulté voire de l'impossibilité d'atteindre des propriétés mécaniques élevées pour pouvoir fabriquer des pièces de structure notamment par le procédé RIM.

La résine polyurée, polyurée-uréthane ou polyuréthane selon l'invention est réticulée grâce à des fonctions isocyanates primaires et secondaires. La résine polyurée, polyurée-uréthane ou polyuréthane est obtenue grâce aux mélanges de deux produits de réaction, à savoir un premier composant de réaction à base d'isocyanate et un second composant de réaction à base d'aminé et/ou de polyol, tels que décrits ci-après.

Le premier composant de réaction de la résine polyurée, polyurée-uréthane ou polyuréthane est totalement ou partiellement biosourcé. Le trimère du diisocyanate de pentaméthylène biosourcé est le composant majoritaire du premier composant de réaction. Il représente au moins 75% de la masse du premier composant de réaction, et de préférence au moins 90% en masse. Il peut être utilisé seul et représenté 100% de la masse du premier composant de réaction, ou mélangé avec un ou plusieurs diisocyanates parmi lesquels, à titre d'exemple, le pentaméthylène diisocyanate, l'hexaméthylène diisocyanate, le diisocyanate d'ester éthylique de L-lysine, l'isophorone diisocyanate, le 4,4'-diisocyanatodicyclohexylmethane, le 4,4'-diisocyanate de diphénylméthylène, le 2-4-diisocyanate de toluène, le 2-6-diisocyanate de toluène, le 1,4-Bis (isocyanatomethyl) cyclohexane, le meta-xylylene diisocyanate, le tetramethyl xylylene diisocyanate, le norbornane diisocyanate, le 1,5-naphtalene diisocyanate. Les trimères, biurets, allophanates ou uretdiones issus des diisocyanates peuvent être utilisés. Les diisocyanates représentent au plus 25%, et préférentiellement au plus 10% en masse du premier composant de réaction.

Le second composant de réaction selon l'invention contient :
(a) pour une résine polyurée, au moins une diamine ou polyamine, biosourcée ou non, ayant 2 ou plus fonctions amines, avec ou sans plastifiant;
(b) pour une résine polyurée-uréthane, un mélange d'au moins une diamine ou polyamine, biosourcée ou non, ayant 2 ou plus fonctions amines, et d'au moins un polyol, biosourcé ou non, ayant 2 ou plus fonctions hydroxyles; et
(c) pour une résine polyuréthane, au moins une partie polyol pouvant comporter un ou plusieurs polyols, biosourcés ou non.

Les matières entrant dans le second composant de réaction des trois types de résine (a), (b) et (c) identifiées ci-dessus, sont détaillés ci-après, en spécifiant par les lettres (a), (b) et (c) s'ils entrent dans l'une et/ou l'autre desdites résines.
(a) et/ou (b) Les diamines ou polyamines utilisées peuvent être biosourcées ou non, ont généralement des poids moléculaires de 100 à 500 g/mol et contiennent de préférence exclusivement des groupes amino primaires ou secondaires (de préférence primaires) liés aromatiquement. Les diamines préférées ont des substituants alkyles dans au moins une position qui est en ortho par rapport aux groupes amino. Les diamines les plus préférées sont celles dans lesquelles au moins un substituant alkyle est présent en position ortho par rapport au premier groupe amino et deux substituants alkyles sont situés en position ortho par rapport au deuxième groupe amino, chaque substituant alkyle ayant 1 à 4 atomes de carbone. Il est particulièrement préféré d'utiliser de tels composés dans lesquels un substituant éthyle, n-propyle, isopropyle, t-butyle et/ou méthylthio est présent en au moins une position ortho aux groupes amino et éventuellement des substituants méthyle en d'autres positions ortho à l'amino groupes. Des exemples spécifiques d'amines préférées comprennent le 2,4-diaminomésitylène, le 1,3,5-triéthyl-2,4-diaminobenzène, le 1,3,5-triisopropyl-2,4-diaminobenzène, 3,5-diethyltoluene-2,4-diamine, 3,5-diethyltoluene-2,6-diamine, 4,6-diméthyl1-2-éthyl-1,3-diaminobenzène, 3,5,3',5'-tétraéthyle -4,4'-diaminodiphényl méthane, 3,5,3'5'-tétraisopropyl-4,4'-diaminodiphényl méthane, 3,5-diéthyl-3,5'-di-isopropyl-4,4-diaminodiphényl méthane, 3, 5-dimethylthio-2, 6-toluenediamine, 3, 5-dimethylthio-2, 4-toluenediamine, la t-butyl toluènediamine. Il entre également dans le cadre de cette invention d'utiliser des matériaux d'allongement de chaîne aminé aliphatique, bien que les amines aliphatiques ne soient pas préférées. Les diamines précitées peuvent bien entendu également être utilisées sous forme de mélanges. Il est particulièrement préféré d'utiliser le 3, 5-dimethylthio-2, 4-toluenediamine ou un mélange de ce composé avec le 3, 5-dimethylthio-2, 6-toluenediamine. Le second composant de type diamine ou polyamine dans le procédé de la présente invention est de préférence utilisé en quantité d'au plus 80 % en masse, le plus préférablement d'au plus 65 % en masse du second composant de réaction.

Les plastifiants, éventuellement mélangés aux diamines ou polyamines, peuvent être biosourcés ou non, et représenter au plus 60%, de préférence au plus 50% et préférentiellement au plus 45% en masse du second composant de réaction. Les plastifiants appropriés sont en particulier les esters d'acide carboxylique, tels que les phtalates, en particulier, le phtalate de benzyle et de n-butyle, le phtalate de diisononyle (DINP), le phtalate de diisodécyle (DIDP) ou le phtalate de di(2-propylheptyle) (DPHP), les phtalates hydrogénés, en particulier le phtalate de diisononyle hydrogéné ou le diisononyl cyclohexane-1,2 -dicarboxylate (DINCH), téréphtalates, notamment dioctyl téréphtalate, trimellitates, adipates, notamment dioctyl adipate, azélates, sébacates, benzoates, éthers de glycol, esters de glycol, esters d'acide organique phosphorique ou sulfonique, esters d'isosorbide, polybutènes, polyisobutènes, ou plastifiants dérivés de graisses ou d'huiles naturelles, en particulier huile de soja ou huile de lin époxydée.

(b) et/ou (c) Les polyols utilisés peuvent être biosourcés ou non, et ont une fonctionnalité hydroxyle égale ou supérieure à deux, à savoir 2 ou plus fonctions hydroxyles. Ils peuvent également contenir des fonctions amines de type secondaire et/ou tertiaire. Ces polyols peuvent être de type polyéther, polyester, polycaprolactone, polytétrahydrofurane ou tout autre type connu. De préférence, les polyols sont de type polyéther, polyester, ou les deux à la fois. Le ou les polyols ont une masse molaire comprise entre 50 et 4000 g/mol, de préférence entre 100 et 2000 g/mol, et préférentiellement entre 150 et 1000 g/mol, et représentent au moins 10%, et préférentiellement au moins 25% en masse totale du second composant de réaction. Il est préférablement utilisé des polyethers polyols biosourcés qui comprennent le poly triméthylène éther glycol produit par réaction de polycondensation du 1,3-propanediol dérivé d'un composant végétal. Il est préférablement utilisé des polyesters polyols biosourcés qui comprennent un polyester polyol d'origine végétale, pour être plus précis, des polyester polyols d'huile végétale obtenus par réaction de condensation d'acide hydroxycarboxylique tel qu'un acide gras d'huile végétale contenant un groupe hydroxyle (par exemple, un acide gras d'huile de ricin contenant de l'acide ricinoléique, de l'huile de ricin hydrogénée acide gras contenant de l'acide 12-hydroxystéarique, etc.) en utilisant le polyol de bas poids moléculaire décrit ci-dessus comme initiateur dans des conditions connues. Des exemples de polyol aminés comprennent les polyols préparés par alcoxylation d'un ou plusieurs initiateurs d'amine avec un ou plusieurs oxydes d'alkylène tels que l'oxyde d'étylene et/ou de propylène. Dans le cadre de l'invention, il est préférablement utilisé des polyols aminés biosourcés qui comprennent les polyols synthétisés par exemple à partir d'huile de colza par la méthode de transamidation/transestérification avec une alcanolamine polyfonctionnelle. Ils contiennent des groupes fonctionnels amine secondaire et/ou tertiaire et hydroxyle primaire. Ces polyols peuvent être utilisés seuls ou en combinaison de deux ou plus.

(c) On ajoute à ces polyols, un diol biosourcé. Plus précisément, le diol biosourcé est un dianhydrohexitol composé hétérocycliques obtenus par double déshydratation d'hexitols tels que le mannitol et le sorbitol. A titre d'exemple, les 1,4-et 3,6-dianhydrohexitols, connus sous les noms d'isosorbide, isoidide et isomannide sont préférentiellement utilisés. Le diol biosourcé représente au moins 10%, et préférentiellement au moins 15% en masse totale du second composant de réaction.

Optionnellement, le second composant de réaction peut contenir un catalyseur pour permettre un démoulage des pièces avec un temps de cycle rapide. Les fonctions isocyanates du premier composant de réaction réagissent avec les groupes hydroxyles et/ou amines du second composant de réaction sous l'influence du catalyseur pour former des liaisons urées et/ou uréthanes. On choisira un catalyseur conventionnel, reconnu dans l'état de l'art pour son usage dans les polyuréthanes, comme un catalyseur à base de métal choisi dans le groupe comportant l'étain, le plomb, le zinc, le bismuth, le cadmium, l'antimoine, l'aluminium, le zirconium, pris seul ou en combinaison, cette liste n'étant pas exhaustive. On préférera un catalyseur à base d'étain, notamment les composés du dibutylétain, et de manière préférentielle le diacétate de dibutylétain ou le dilaurate de dibutylétain. Le catalyseur est inclus à hauteur d'au moins 200 ppm et d'au plus 5000 ppm du second composant de réaction et préférentiellement à plus de 300 ppm.

Optionnellement, le second composant de réaction peut inclure divers additifs. Par exemple, des anti-mousses peuvent être utilisés pour améliorer l'aspect final de ladite résine. Les anti-mousses généralement reconnus dans l'état de l'art sont convenables pour l'invention, tels qu'à titre d'exemple ceux commercialisés sous la marque BYK066N, sans que cet exemple ne soit limitatif. La quantité d'anti-mousse dans le second composant de réaction est préférentiellement comprise entre 0,05 et 2% en masse.

Il est également possible d'ajouter un absorbeur d'humidité. Il contribue à la bonne formation de ladite résine en captant l'humidité pouvant être contenue dans l'aminé et/ou le polyol et ainsi réduire l'action de l'humidité sur l'isocyanate (telle que la formation de bulles liées au dégagement de dioxyde de carbone) lors de la réaction de polymérisation. Les absorbeurs d'humidité généralement reconnus dans l'état de l'art sont convenables pour l'invention, tels qu'à titre d'exemple, ceux commercialisés sous la marque Siliporite SA 1720 sans que cet exemple ne soit limitatif. La quantité d'absorbeur d'humidité dans le second composant de réaction est préférentiellement inférieure à 2% en masse.

De plus, d'autres additifs peuvent éventuellement être intégrés dans le second composant de réaction comme des colorants, des anti-oxydants, des stabilisateurs de lumière (HALS). Les produits conventionnels de ces catégories d'additifs reconnus dans l'état de l'art peuvent convenir dans l'invention pour améliorer les propriétés finales de ladite résine. Les colorants sont préférentiellement inclus dans le second composant de réaction entre 0,1 et 2% en masse, les anti-oxydants entre 0,1 et 2% en masse et les stabilisateurs de lumière (HALS) entre 0.1 et 2% en masse.

Le premier composant de réaction et le second composant de réaction sont combinés pour former un mélange ayant un ratio NCO/(NH₂+OH) (nombre de fonctions isocyanates/nombres de fonctions amines primaires et hydroxyles) entre 0,75 et 1,25 et préférentiellement entre 0,9 et 1,1.

La polymérisation de la résine polyurée, polyurée-uréthane ou polyuréthane obtenue peut être effectuée dans tout type de procédé de fabrication de pièces par moulage, injection, extrusion, thermoformage, surmoulage, etc. De préférence, la polymérisation de la résine polyurée, polyurée-uréthane ou polyuréthane obtenue s'effectue selon le procédé RIM dans un moule à température ambiante ou à température comprise entre 30°C et 110°C et préférentiellement comprise entre 40°C et 90°C. De plus, la résine polyurée, polyurée-uréthane ou polyuréthane obtenue est très réactive, puisque son temps de travail (durée nécessaire à la polymérisation) est inférieur à 5 minutes, préférentiellement inférieur à 3 minutes, et son temps de démoulage est inférieur à 30 minutes et préférentiellement inférieur à 20 minutes.

La résine polyurée, polyurée-uréthane ou polyuréthane selon l'invention ainsi polymérisée est avantageusement biosourcée au moins à 35% en masse.

La résine polyurée, polyurée-uréthane ou polyuréthane selon l'invention peut être renforcée par l'ajout de charges pour obtenir un matériau composite présentant des propriétés mécaniques augmentées. Les charges de renfort convenant à l'invention peuvent correspondre à celles connues par l'homme de l'art. On choisira préférentiellement des fibres naturelles organiques et inorganiques, seules ou en mélange, pouvant se présenter sous la forme de poudres ou de fibres. Par fibre, on entend un matériau dont le facteur de forme, c'est-à-dire la longueur divisée par le diamètre, est supérieur à 5, de préférence supérieur à 20, et préférentiellement supérieur à 100. Par poudre, on entend un matériau dont le facteur de forme est inférieur à 5. Les fibres naturelles inorganiques qui conviennent à l'invention sont, par exemple, les fibres de verre, les fibres de basalte, les fibres de roche. Les fibres naturelles organiques qui conviennent à l'invention sont, par exemple, les fibres de lin, les fibres de chanvre, les fibres de bois dur ou tendre, les fibres de cellulose, les fibres de sisal, les fibres de bambou ainsi que toutes les fibres issues du monde végétal terrestre et aquatique, et du monde animal. Les fibres choisies peuvent avoir un diamètre inférieur à 0.5 mm, de préférence inférieur à 0.3 mm, et préférentiellement inférieur à 0.05 mm. Les fibres peuvent avoir une teneur en eau inférieure à 10%, de préférence inférieure à 5%, et préférentiellement inférieure à 1%.

Dans un mode préféré de l'invention, les charges de renfort sont constituées de fibres naturelles choisies dans le groupe comportant les fibres de bambou, de bois, de sisal, de lin, de chanvre, de cellulose, prises seules ou mélangées entre au moins deux d'entre-elles. Le pourcentage des charges de renfort en masse dans le matériau composite de l'invention est supérieur à 5%, de préférence supérieur à 7,5%, et préférentiellement supérieur ou égal à 10%. Les charges de renfort peuvent être ajoutées et mélangées indépendamment dans le premier composant de réaction et/ou le second composant de réaction. De préférence, les charges de renfort sont ajoutées et mélangées dans le second composant de réaction, et représentent au moins 15% et de préférence au moins 20% en masse dudit second composant de réaction, sans que cet exemple ne soit limitatif.

### Formule(s) de base

Il n'existe pas une, mais plusieurs formules de base, en fonction des caractéristiques mécaniques finales désirées. Cependant, les principes de formulation restent les mêmes quelles que soient les modifications apportées. Comme décrit précédemment, il faut un premier composant de réaction à base d'isocyanate et un second composant de réaction à base d'aminé et/ou de polyol pour former la résine polyurée, polyurée-uréthane ou polyuréthane selon l'invention. C'est en mélangeant une quantité définie de chaque composant de réaction que l'on obtient une résine polyurée, polyurée-uréthane ou polyuréthane, ce rapport de mélange est variable selon la formule utilisée.

Formule de base de la résine polyurée seule correspondant à l'exemple 1 [Table 1]) :
1 - Formulation du premier composant de réaction à base d'isocyanate aliphatique biosourcé :
   - 100 g de trimère du diisocyanate de pentaméthylène biosourcé sont directement conditionnés.
2 - Formulation du second composant de réaction à base d'amine et de plastifiant :
   - 55 g de 3,5-dimethylthio-2,4-toluenediamine de masse molaire 214 sont ajoutés dans un réacteur ainsi que 44,9 g de Santicizer S261A (plastifiant),
   - 0,1 g de BYK066N (2,6-diméthylheptan-4-one) est ajouté dans le réacteur,
   - Le mélange est agité pendant 4h sous vide,
   - Puis le produit est conditionné.

Formule du matériau composite correspondant à l'exemple 40 [Table 3] :
1 - Formulation du premier composant de réaction à base d'isocyanate aliphatique biosourcé :
   - 100 g de trimère du diisocyanate de pentaméthylène biosourcé sont directement conditionnés.
2 - Formulation du second composant de réaction à base d'aminé, de polyol et de fibres naturelles :
   - 44 g de 3,5-dimethylthio-2,4-toluenediamine de masse molaire 214 sont ajoutés dans un réacteur ainsi que 20,72 g de Sovermol 1102 (polyol biosourcé) ayant une fonctionnalité de 2,1 et de type polyéther branché polyester de masse molaire 512,
   - 2,97 g de Siliporite SA 1720 (zéolithes), 0,22 g de BYK066N (2,6-diméthylheptan-4- one) et 0,09 g de dilaurate de dibutylétain sont ajoutés dans le réacteur,
   - Le mélange est agité pendant 1h sous vide,
   - 17 g de fibres de bambou BF30 sont ajoutées dans le réacteur,
   - Le mélange est agité pendant 4h sous vide,
   - Puis le produit est conditionné.

### Méthodes de test

Les méthodes détaillées ci-dessous pour relever les paramètres pertinents sont utilisées pour caractériser les exemples conformément à l'invention. Il est convenu que par « conditions normales de température et d'humidité relative », on entend une température de 23°C et une humidité relative inférieure à 50%. Si les conditions ne sont pas précisées alors il est convenu que les essais sont réalisés dans les conditions normales de température et d'humidité relative.

### Détermination des caractéristiques mécaniques en flexion par machine de traction

Les caractéristiques mécaniques en flexion, telles que l'allongement, la contrainte ainsi que le module en flexion, sont déterminées par un test de flexion en trois points selon la norme NF EN ISO 178 sur une machine de traction MTS. Les valeurs indiquées sont les moyennes de 5 mesures.

### Détermination de la dureté

La dureté Shore D est mesurée selon la norme DIN EN ISO 868 à l'aide d'un duromètre Shore D Bareiss.

### Détermination de la densité

La densité des pièces polyuréthanes obtenues après polymérisation est mesurée selon la norme DIN EN ISO 1183-1.

### Tableaux comparatifs

**[Table 1] Caractérisation de la résine polyurée pure et renforcée par des charges issues de fibres naturelles**

| | Exemple 1 | Exemple 2 | Exemple 3 | Exemple 4 | Exemple 15 | Exemple 16 |
|---|---|---|---|---|---|---|
| **1^{er} composant de réaction (qrammes) à base d'isocyanate aliphatique biosourcé** | | | | | | |
| Desmodur eco N 7300 | 100 | 100 | 100 | 100 | 100 | 100 |

| **2^{ème} composant de réaction (grammes) à base d'amine aromaticue et de plastifiant** | | | | | | |
|---|---|---|---|---|---|---|
| Ethacure 300 | 55.0 | 55.0 | 55.0 | 55.0 | 55.0 | 55.0 |
| Santicizer 261 A | 44.9 | 44.9 | 44.9 | 44.9 | 44.9 | 44.9 |
| BYK066 N | 0.1 | 0.1 | 0.1 | 0.1 | 0.1 | 0.1 |
| Renfort | - | 10 | 20 | 30 | 40 | 50 |

| **Résultats** | | | | | | |
|---|---|---|---|---|---|---|
| % Renfort total | - | 4.8 | 9.1 | 13.0 | 16.7 | 20.0 |
| % Carbone Biosourcé total | 35 | 38 | 41 | 43.5 | 46 | 48 |
| Dureté (Sh D) | 75 | 75 | 76 | 76 | 78 | 75 |
| Contrainte à rupture en flexion (MPa) | 62 | 65 | 58 | 50 | 47 | 45 |
| Module flexion (MPa) | 1948 | 2268 | 2313 | 2316 | 2414 | 2461 |
| Densité | 1.19 | 1.22 | 1.22 | 1.19 | 1.21 | 1.18 |

L'exemple 1 décrit une résine polyurée pure et les exemples 2, 3, 4, 15 et 16 décrivent différents matériaux composites obtenus à partir de la résine polyurée pure de l'exemple 1 à laquelle des charges de renfort ont été ajoutées.

La résine pure et tous les matériaux composites obtenus présentent une densité inférieure à 1,3 g/cm³, une dureté supérieure à 70 Shore D, et un taux de carbone biosourcée d'au moins 35%.

**[Table 2] Influence des charges de renfort issues de fibres naturelles**

| Exemple | Renfort | Forme | % massique de renfort dans le 1^{er} composant/total | Contrainte à rupture en flexion (MPa) | Module de flexion (MPa) | Dureté (Sh D) | Densité | % Carbone Biosourcé total |
|---|---|---|---|---|---|---|---|---|
| Exemple 1 | - | - | - | 62 | 1948 | 75 | 1.19 | 35.0 |
| Exemple 2 | HAHO 120/f | Poudre | 9.1/4.8 | 65 | 2268 | 75 | 1.22 | 38.1 |
| Exemple 3 | HAHO 120/f | Poudre | 16.7/9.1 | 58 | 2313 | 76 | 1.22 | 40.9 |
| Exemple 4 | HAHO 120/f | Poudre | 23.1/13.0 | 50 | 2316 | 76 | 1.19 | 43.5 |
| Exemple 5 | HAHO 150-30 | Poudre | 9.1/4.8 | 55 | 2148 | 76 | 1.24 | 38.1 |
| Exemple 6 | HAHO 150-30 | Poudre | 16.7/9.1 | 48 | 2276 | 75 | 1.21 | 40.9 |
| Exemple 7 | HAHO 150-30 | Poudre | 23.1/13.0 | 47 | 2354 | 76 | 1.18 | 43.5 |
| Exemple 8 | WEHO 120/f | Poudre | 9.1/4.8 | 59 | 2247 | 76 | 1.22 | 38.1 |
| Exemple 9 | WEHO 120/f | Poudre | 16.7/9.1 | 50.0 | 2340 | 77 | 1.18 | 40.9 |
| Exemple 10 | WEHO 250/f | Poudre | 9.1/4.8 | 60.0 | 2192 | 75 | 1.20 | 38.1 |
| Exemple 11 | WEHO 250/f | Poudre | 16.7/9.1 | 52 | 2225 | 76 | 1.18 | 40.9 |
| Exemple 12 | HM30 | Poudre | 9.1/4.8 | 67 | 2157 | 76 | 1.22 | 38.1 |
| Exemple 13 | HM30 | Poudre | 16.7/9.1 | 59 | 2374 | 76 | 1.22 | 40.9 |
| Exemple 14 | HM30 | Poudre | 23.1/13.0 | 48 | 2435 | 77 | 1.25 | 43.5 |
| Exemple 15 | HM30 | Poudre | 28.6/16.7 | 47 | 2414 | 78 | 1.21 | 45.8 |
| Exemple 16 | HM30 | Poudre | 33.3/20.0 | 45 | 2461 | 75 | 1.18 | 48.0 |
| Exemple 17 | HM75 | Poudre | 9.1/4.8 | 63 | 2159 | 75 | 1.22 | 38.1 |
| Exemple 18 | HM75 | Poudre | 16.7/9.1 | 54 | 2261 | 77 | 1.23 | 40.9 |
| Exemple 19 | HM75 | Poudre | 23.1/13.0 | 56 | 2417 | 76 | 1.22 | 43.5 |
| Exemple 20 | HM75 | Poudre | 28.6/16.7 | 52 | 2590 | 77 | 1.24 | 45.8 |
| Exemple 21 | HM90 | Poudre | 9.1/4.8 | 59 | 2167 | 77 | 1.23 | 38.1 |
| Exemple 22 | HM90 | Poudre | 16.7/9.1 | 58 | 2387 | 76 | 1.23 | 40.9 |
| Exemple 23 | HM90 | Poudre | 23.1/13.0 | 55 | 2363 | 77 | 1.18 | 43.5 |
| Exemple 24 | HM90 | Poudre | 28.6/16.7 | 50.0 | 2430 | 76 | 1.21 | 45.8 |
| Exemple 25 | BF30 | Poudre | 9.1/4.8 | 45 | 2167 | 75 | 1.22 | 38.1 |
| Exemple 26 | BF30 | Poudre | 16.7/9.1 | 58 | 2296 | 77 | 1.20 | 40.9 |
| Exemple 27 | BF30 | Poudre | 23.1/13.0 | 59 | 2444 | 76 | 1.24 | 43.5 |
| Exemple 28 | BF30 | Poudre | 28.6/16.7 | 52 | 2466 | 76 | 1.25 | 45.8 |
| Exemple 29 | BF75 | Poudre | 9.1/4.8 | 69 | 2144 | 75 | 1.21 | 38.1 |
| Exemple 30 | BF75 | Poudre | 16.7/9.1 | 59 | 2246 | 76 | 1.22 | 40.9 |
| Exemple 31 | BF75 | Poudre | 23.1/13.0 | 61 | 2405 | 75 | 1.22 | 43.5 |
| Exemple 32 | BF75 | Poudre | 28.6/16.7 | 58 | 2436 | 75 | 1.23 | 45.8 |
| Exemple 33 | BF90 | Poudre | 9.1/4.8 | 67 | 2169 | 76 | 1.20 | 38.1 |
| Exemple 34 | BF90 | Poudre | 16.7/9.1 | 51 | 2319 | 76 | 1.21 | 40.9 |
| Exemple 35 | BF90 | Poudre | 23.1/13.0 | 51 | 2446 | 76 | 1.21 | 43.5 |
| Exemple 36 | BF300 | Fibre | 9.1/4.8 | 65 | 2190 | 76 | 1.23 | 38.1 |
| Exemple 37 | BF300 | Fibre | 16.7/9.1 | 51 | 2234 | 76 | 1.18 | 40.9 |

Différentes charges de renfort ont été testées avec différentes granulométries et formes. De manière générale, la variation de densité est faible voire négligeable dans la plupart des cas, et reste toujours inférieure à 1,25. C'est un point important, car généralement, la densité augmente en fonction du pourcentage de charges de renfort dans la résine polyurée, polyurée-uréthane ou polyuréthane de l'état de la technique. Le module de flexion est lui fortement augmenté par la présence de charges de renfort. En effet, les charges de renfort améliorent d'au moins 10% cette caractéristique par rapport à l'exemple 1 servant de référence. Dans l'exemple 20, le module de flexion est même supérieur de 33% par rapport à l'exemple 1 servant de référence. L'augmentation du module de flexion confère une plus grande rigidité aux pièces fabriquées à partir de ces matériaux composites et permet leur utilisation pour des applications structurelles. Les valeurs de contrainte à rupture en flexion restent supérieures à 45 MPa dans tous les exemples décrits, ce qui correspond à une valeur élevée pour des pièces de structure. Il est intéressant de noter que les différentes charges de renfort testées conduisent à une augmentation du module d'élasticité quelle que soit leur nature et/ou forme. Il est possible d'atteindre un taux de charges de renfort supérieure à 10% sans impacter la mise en œuvre par moulage de ces matériaux, notamment par le procédé RIM.

**[Table 3] Caractérisation des résines polyurée-uréthanes pures et renforcées par des charges issues de fibres naturelles**

| | Exemple 38 | Exemple 39 | Exemple 40 | Exemple 41 | Exemple 42 | Exemple 43 | Exemple 44 | Exemple 45 |
|---|---|---|---|---|---|---|---|---|
| **1^{er} composant de réaction (grammes) à base d'isocyanate aliphatique biosourcé** | | | | | | | | |
| Desmodur eco N 7300 | 100 | 100 | 100 | 100 | 100 | - | - | - |
| Stabio D-370 N | - | - | - | - | - | 100 | - | - |
| Stabio D-376 N | | | | | | | 100 | 100 |
| | | | | | | | | |

| **2^{ème} composant de réaction (grammes) à base d'amine aromatique et de polyol** | | | | | | | | |
|---|---|---|---|---|---|---|---|---|
| Ethacure 300 | 44.0 | 29.56 | 44.0 | 30.0 | 47.7 | 44.0 | 34.4 | 34.4 |
| Sovermol 1102 | 20.56 | 20.0 | 20.72 | 20.54 | - | 20.72 | 50.22 | 50.22 |
| Velvetol H1000 | - | - | - | - | 20 | - | - | - |
| Isosorbide | - | 10.0 | - | 10.0 | - | - | - | - |
| BYK066 N | 0.22 | 0.22 | 0.22 | 0.22 | 0.21 | 0.22 | 0.22 | 0.22 |
| Siliporite SA 1720 | - | - | 2.97 | - | 2.50 | 2.97 | 1.90 | 1.90 |
| Dabco T12 N | 0.22 | 0.22 | 0.09 | 0.22 | 0.09 | 0.09 | 0.30 | 0.30 |
| BF30 | - | - | 17 | 3.3 | 12.5 | 17 | - | 23 |

| **Résultats** | | | | | | | | |
|---|---|---|---|---|---|---|---|---|
| % Biosourcé total | 52.4 | 60.0 | 56.0 | 60.7 | 56.0 | 56.0 | 58.9 | 63.3 |
| Dureté (Sh D) | 75 | 77 | 83 | 75 | 80 | 83 | 75 | 79 |
| Densité | 1.18 | 1.20 | 1.18 | 1.21 | 1.15 | 1.18 | 1.14 | 1.16 |

Toutes les résines et les matériaux composites obtenus présentent une densité inférieure à 1,3 g/cm³, une dureté supérieure à 70 Shore D, et un taux de carbone biosourcée supérieur à 50%.

Les exemples 39, 41 et 45 démontrent qu'il est possible d'obtenir des pièces polyurée-uréthanes biosourcées à plus de 60%, renforcées ou non, ayant des duretés élevées et une densité similaire à des pièces polyurée-uréthanes classiques. Ces matériaux, grâce à un taux de carbone biosourcé très élevé, jamais atteint jusqu'alors, permettent une réduction significative de l'empreinte carbone des pièces produites avec ces matériaux. Il est également intéressant de pouvoir varier le taux de charges de renfort en fonction de l'application visée. Les matériaux non chargés présentent en outre une très grande transparence qui peut être nécessaire et avantageux pour certaines applications.

**[Table 4]: Polyuréthane à très haut pourcentage de biosourcé à base d'isosorbide et de polyol biosourcé**

| | Exemple 46 | Exemple 47 |
|---|---|---|
| **1^{er} composant de réaction (grammes) à base d'isocyanate aliphatique biosourcé** | | |
| Stabio D-376 N | 100 | 100 |

| **2nd composant de réaction (grammes) à base de polyol biosourcé et d'isosorbide** | | |
|---|---|---|
| Velvetol H1000 | 20,5 | - |
| Velvetol H2000 | | 26 |
| Isosorbide | 36 | 37 |
| BYK066 N | 0.20 | 0.2 |
| Siliporite SA 1720 | - | - |
| Dabco T12 N | 0.178 | 0.17 |
| BF30 | - | - |

| **Résultats** | | |
|---|---|---|
| % Biosourcé total | 80.6 | 81.6 |
| Dureté (Sh D) | 75 | 72 |
| Densité | 1.15 | 1.16 |
| Couleur | Incolore | Incolore |

Les résines obtenues présentent une densité inférieure à 1,3 g/cm3, une dureté supérieure à 70 Shore D, et un taux de carbone biosourcée supérieur à 80%. Les exemples 46 et 47 démontrent qu'il est possible d'obtenir des polyuréthanes biosourcés avec un taux de carbone biosourcé très élevé, supérieur à 80%, ayant des duretés élevées et une densité similaire à des pièces classiques. De plus les matériaux obtenus sont avantageusement optiquement transparents et incolores.

**[Table 5] Matières utilisées**

| **Désignation** | **Description** | **Taux de Carbone biosourcé** |
|---|---|---|
| Desmodur eco N 7300 | Trimère du diisocyanate de pentaméthylène biosourcé | 70% |
| Stabio D-370 N | Trimère du diisocyanate de pentaméthylène biosourcé | 70% |
| Stabio D-376 N | Trimère du diisocyanate de pentaméthylène biosourcé | 70% |
| Ethacure 300 | Dimethylthiotoluenediamine | 0% |
| Sovermol 1102 | Polyol polyéther branché polyester biosourcé | >80% |
| Velvetol H1000 | Polyol polyéther biosourcé | 100% |
| Velvetol H2000 | Polyol polyéther biosourcé | 100% |
| Isosorbide | Diol cycloaliphatique biosourcé | 100% |
| Dabco T12 N | Dilaurate de dibutylétain | 0% |
| Siliporite SA 1720 | Zéolithe | N/A |
| Santicizer S261 A | Plastifiant | 0% |
| Dabco T-12N | Dilaurate de dibutylétain | 0% |
| BYK066 N | Agent débullant | 0% |
| HAHO 120/f | Poudre de bois dur de granulométrie 120µm | 100% |
| HAHO 150-30 | Poudre de bois dur de granulométrie entre 150 et 30µm | 100% |
| WEHO 120/f | Poudre de bois tendre de granulométrie 120µm | 100% |
| WEHO 250/f | Poudre de bois tendre de granulométrie 250µm | 100% |
| HM30 | Poudre d'hémilocellulose de granulométrie 30µm | 100% |
| HM75 | Poudre d'hémilocellulose de granulométrie 75µm | 100% |
| HM90 | Poudre d'hémilocellulose de granulométrie 90µm | 100% |
| BF30 | Poudre de bambou de granulométrie 30µm | 100% |
| BF75 | Poudre de bambou de granulométrie 75µm | 100% |
| BF90 | Poudre de bambou de granulométrie 90µm | 100% |
| BF300 | Fibre de bambou de granulométrie 300µm | 100% |

Les matières listées dans le [Table 5] correspondent à celles utilisées dans les exemples 1 à 47 décrits ci-dessus, mais ne sont pas exhaustives et toutes autres matières correspondantes ou équivalentes peuvent convenir.

Les résines polyurées, polyurée-uréthanes et polyuréthanes de l'invention ainsi que les matériaux composites de l'invention sont particulièrement adaptés pour être mis en œuvre dans un procédé de fabrication RIM (Reaction Injection Moulding). En outre, l'invention répond aux buts fixés de réduire fortement l'empreinte carbone des pièces moulées obtenues notamment par le procédé RIM, car elles comprennent des matières premières biosourcées à hauteur minimum de 35% en masse totale, le matériau composite comportant essentiellement au moins un premier composant de réaction à base du trimère du diisocyanate de pentaméthylène biosourcé, et au moins un second composant de réaction à base d'aminé aromatique et/ou de polyol et/ou de plastifiant et de fibres naturelles.

Les caractéristiques de mise en œuvre et les propriétés physiques du matériau composite produit à partir de la résine polyurée, polyurée-uréthane ou polyuréthane de l'invention sont particulièrement avantageuses pour la production de pièces moulées en grande série présentant une grande légèreté (caractérisée par une densité inférieure à 1,3 g/cm³), d'excellentes propriétés mécaniques (caractérisées par une dureté supérieure ou égale à 70 Shore D), et une faible empreinte carbone. Le matériau composite selon invention est particulièrement adapté à des applications pour des pièces de structure telles que des boitiers ou capots de machines, des pièces de carrosseries ou d'habitacles de voitures, de camping-car, de bus, des habillages intérieurs de bateaux, de trains ou d'avions, sans que cette liste ne soit limitative.

La présente invention n'est bien entendu pas limitée aux exemples de réalisation décrits mais s'étend à toute modification et variante évidentes pour un homme du métier dans la limite des revendications annexées.

## Revendications

1. Résine polyurée, polyurée-uréthane ou polyuréthane qui est le produit de réaction d'au moins un premier composant de réaction à base d'isocyanate et d'au moins un second composant de réaction à base d'amine et/ou de polyol, **caractérisée :**
**en ce que** ledit premier composant de réaction comporte au moins un trimère du diisocyanate de pentaméthylène biosourcé, représentant au moins 75%, de préférence au moins 90% et plus préférentiellement 100% en masse dudit premier composant de réaction ;
**en ce que** ledit second composant de réaction comporte au moins une polyamine aromatique et optionnellement au moins un polyol, ou comporte au moins un polyol et au moins un diol biosourcé de type dianhydrohexitol ;
**en ce que** ledit premier composant de réaction et ledit second composant de réaction présentent ensemble un rapport NCO/NH₂+OH compris entre 0,75 et 1,25 et préférentiellement entre 0,9 et 1,1 ; et
**en ce que** ladite résine polyurée, polyurée-uréthane ou polyuréthane est biosourcée à au moins 35% de la masse totale.

2. Résine selon la revendication 1, **caractérisée en ce que** ledit premier composant de réaction comporte en outre au moins un diisocyanates, représentant au plus 25% et préférentiellement au plus 10% en masse du premier composant de réaction, choisi dans le groupe comprenant le pentaméthylène diisocyanate, l'hexaméthylène diisocyanate, le diisocyanate d'ester éthylique de L-lysine, l'isophorone diisocyanate, le 4,4'-diisocyanatodicyclohexylmethane, le 4,4'-diisocyanate de diphénylméthylène, le 2-4-diisocyanate de toluène, le 2-6-diisocyanate de toluène, le 1,4-Bis (isocyanatomethyl) cyclohexane, le meta-xylylene diisocyanate, le tetramethyl xylylene diisocyanate, le norbornane diisocyanate, le 1,5-naphtalene diisocyanate, les trimères, biurets, allophanates ou uretdiones issus des diisocyanates.

3. Résine selon l'une quelconque des revendications précédentes, **caractérisée en ce que** ledit second composant de réaction comporte au moins une polyamine aromatique et **en ce que** ladite polyamine aromatique a une masse molaire inférieure à 1000 g/mol et de préférence comprise entre 100 et 500 g/mol, et représente au plus 80% et de préférence au plus 65% en masse dudit second composant de réaction.

4. Résine selon la revendication 3, **caractérisée en ce que** ladite polyamine aromatique est choisie parmi la 3,5-diethyltoluene-2,4-diamine, la 3,5-diethyltoluene-2,6-diamine, la 3,5-dimethylthio-2,4-toluenediamine, la 3,5-dimethylthio-2,6-toluenediamine ou un mélange de ces composés.

5. Résine selon l'une quelconque des revendications précédentes, **caractérisée en ce que** ledit second composant de réaction comporte au moins une polyamine et comporte en outre un plastifiant qui représente au plus 60%, de préférence au plus 50% et préférentiellement au plus 45% en masse dudit second composant de réaction.

6. Résine selon la revendication 1 ou 2, **caractérisée en ce que** ledit diol biosourcé de type dianhydrohexitol représente au moins 10% et de préférence au moins 15% en masse dudit second composant de réaction.

7. Résine selon l'une quelconque des revendications 1, 2 ou 6, **caractérisée en ce que** ledit diol biosourcé de type dianhydrohexitol est choisi parmi l'isosorbide, le mannitol, le sorbitol, l'isoidide, l'isomanide ou un mélange de ces composés

8. Résine selon l'une quelconque des revendications précédentes, **caractérisée en ce que** ledit second composant de réaction comporte au moins un polyol, et **en ce que** ledit polyol représente au moins 10% et de préférence au moins 25% en masse dudit premier composant de réaction, est choisi dans le groupe comprenant les polyéther polyols, les polyester polyols, les polycaprolactone polyols, les polytétrahydrofurane polyols, et les polyéther polyester polyols, a une masse molaire comprise entre 50 et 4000 g/mol, de préférence entre 100 et 2000 g/mol et préférentiellement entre 150 et 1000 g/mol, et représente au moins 10% et préférentiellement au moins 25% en masse totale du second composant de réaction.

9. Résine selon l'une quelconque des revendications précédentes, **caractérisée en ce que** ledit second composant de réaction comporte en outre un catalyseur à base de métal choisi dans le groupe comprenant l'étain, le plomb, le zinc, le bismuth, le cadmium, l'antimoine, l'aluminium, le zirconium, pris seul ou en combinaison ; et/ou au moins un additif choisi parmi un absorbeur de rayonnement ultra-violets à hauteur de 0.1% à 4% en masse, un stabilisateur de lumière à hauteur de 0,1% à 2% en masse, un absorbeur d'humidité à hauteur de 0,1% à 3% en masse, un anti-mousse dans une quantité inférieure à 0,2% en masse, un antioxydant à hauteur de 0,1% à 2% en masse, un colorant dans une quantité inférieur à 2% en masse.

10. Matériau composite qui est un mélange d'une résine polyurée, polyurée-uréthane ou polyuréthane selon l'une quelconque des revendications 1 à 9, et de charges de renfort, **caractérisé en ce que** lesdites charges de renfort représentent au moins 15% et de préférence au moins 20% en masse du second composant de réaction de ladite résine polyurée, polyurée-uréthane ou polyuréthane, ou au moins 5%, de préférence au moins 7,5%, et préférentiellement au moins 10% en masse totale dudit matériau composite.

11. Matériau composite selon la revendication 10, **caractérisé en ce que** lesdites charges de renfort comprennent des fibres naturelles choisies dans le groupe comportant des fibres de bambou, de bois, de sisal, de lin, de chanvre, de cellulose, prises seules ou mélangées entre au moins deux d'entre-elles.

12. Procédé de fabrication d'une pièce à partir de ladite résine polyurée, polyurée-uréthane ou polyuréthane selon l'une quelconque des revendications 1 à 9 ou dudit matériau composite selon l'une quelconque des revendications 10 ou 11, dans lequel la polymérisation de ladite résine polyurée, polyurée-uréthane ou polyuréthane ou dudit matériau composite s'effectue lors d'un procédé de fabrication RIM dans un moule à température ambiante, ou à température comprise entre 30°C et 110°C et préférentiellement comprise entre 40°C et 90°C.

13. Procédé selon la revendication 12, **caractérisé en ce que** la durée nécessaire à la polymérisation est inférieure à 5 minutes, préférentiellement inférieure à 3 minutes, et le temps de démoulage de la pièce obtenue est inférieur à 30 minutes et préférentiellement inférieur à 20 minutes.

14. Pièce **caractérisée en ce qu'**elle est au moins partiellement en une résine polyurée, polyurée-uréthane ou polyuréthane selon l'une quelconque des revendications 1 à 9 ou en un matériau composite selon l'une quelconque des revendications 10 ou 11.

15. Pièce selon la revendication 14, **caractérisée en ce qu'**il s'agit d'une pièce de structure ayant une densité inférieure à 1,3 g/cm³, une dureté supérieure ou égale à 70 Shore D, et un taux de matières biosourcées d'au moins 35% de la masse totale de ladite pièce.
